# EUROPEAN PATENT SPECIFICATION

(11) **EP 2 257 066 B1**
(45) Date of publication and mention of the grant of the patent: **12.12.2012**
(21) Application number: 09746488.7
(22) Date of filing: 23.04.2009
(51) Int. Cl.: H04N 7/18, B60R 1/00, B60R 11/02, G08G 1/16, B60R 21/00

(54) **PERIPHERY MONITORING APPARATUS**
PERIPHERIEÜBERWACHUNGSVORRICHTUNG
DISPOSITIF DE SURVEILLANCE PÉRIPHÉRIQUE

(30) Priority: 14.05.2008 JP 2008127257
(43) Date of publication of application: 01.12.2010
(73) Proprietor: Aisin Seiki Kabushiki Kaisha, Kariya-shi, Aichi 448-8650 (JP)
(72) Inventor: WATANABE, Kazuya, Kariya-shi Aichi 448-8650 (JP); SATO, Kosuke, Kariya-shi Aichi 448-8650 (JP)
(74) Representative: Kramer - Barske - Schmidtchen
(86) International application number: PCT/JP2009/058063
(87) International publication number: WO 2009/139281

(56) References cited:
- WO-A1-2006/006689
- JP-A- 2000 055 659
- JP-A- 2002 225 629
- JP-A- 2003 137 051
- JP-A- 2004 102 827
- JP-A- 2006 180 446
- JP-A- 2007 233 430

## Description

### Technical Field

The present invention relates to a periphery monitoring apparatus for monitoring periphery of a vehicle.

### Background Art

In recent years, there have been proposed various kinds of driving assisting apparatuses for assisting driving of a vehicle so that the vehicle driving may proceed in safe and smooth manner. The driving assisting apparatuses of this kind include an image switching apparatus for switching over an image to be displayed on a monitor device between or among a plurality of images of vehicle periphery captured by a plurality of cameras mounted on the vehicle (e.g. Patent Document 1).

With the image switching apparatus disclosed in Japanese Patent Application "Kokai" No. 2003-224845, 1, a stop condition detecting means is provided for detecting whether the vehicle is under stopped condition or not. When this stop condition detecting means determines that the vehicle is currently under stopped condition, then, a steering condition of a steering wheel is detected. And, based upon the result of this detection of the steering condition, the apparatus decides which camera image is to be displayed on the monitor device, from a plurality of images of the vehicle periphery captured by the plurality of cameras and then, the image on the monitor display is switched over to this decided camera image. Japanese Patent Application "Kokai" No. 2003-224845 discloses an exemple of a periphery monitory apparatus for monitoring periphery of a vehicle.

WO 2006/006689 A1 discloses the features of the preamble of claim 1 and relates to a display system mounted to a vehicle for easily and accurately recognizing a view in front of a vehicle as well as fuse of a left rear side or right rear side of the vehicle.

### Summary of the Invention

### Problem to be Solved by Invention

However, with the image switching apparatus disclosed in discloses the features of the preamble of claim 1, the image of the camera imaging the periphery of the vehicle is switched over, based on a count value determined in accordance with a steering condition of the steering wheel, that is, the steering of the steering wheel. Therefore, in case the display device is used also as a display device for displaying route guidance by a navigation system or as a display device for a car-mounted television set, depending on the steering condition of the steering wheel, the image on the display device may sometimes be switched over inadvertently to a camera image even when this camera image is not needed by the driver of the vehicle.

The present invention has been made in view of the above-described problem. The principal object of the invention is to provide a periphery monitoring apparatus capable of displaying an image of the periphery of a vehicle appropriately, depending on the traveling condition of the vehicle.

### Means for Solving Problem

The above-noted object is solved by a periphery monitoring apparatus according to claim 1.

With the above-described characterizing construction, when the vehicle approaches the target feature, the display image switchover deciding section effects the above-described decision and based on the result of this decision, a side-view image including a lateral side of the vehicle is displayed on the monitor device. Therefore, it is possible to switch over the display image to the side-view image only when the driver of the vehicle desires to look closely at the periphery of the vehicle. Therefore, appropriate displaying of the vehicle periphery is made possible.

Further, preferably, said imaging device includes a side-view camera for imaging the lateral side of the vehicle and said image recognition process is effected with using image information captured by said side-view camera, and said side-view image is an image based on the image information captured by said side-view camera.

With the above-described construction, even when the apparatus includes only a side-view camera as its imaging device, appropriate displaying of the vehicle periphery is possible.

Alternatively, said imaging device includes a side-view camera for imaging the lateral side of the vehicle and a back-view camera for imaging a back side of the vehicle, and said image recognition process is effected with using image information captured by said back-view camera, and said side-view image is an image based on the image information captured by said side-view camera.

With the above-described construction, based on the image captured by the back-view camera, it is possible to specifically decide that the vehicle is now approaching a feature present rearwardly of the vehicle and to display the periphery of the vehicle as such.

Further, preferably, said switchover to the side-view image is effected when an intersection angle less than a predetermined angle is formed by intersection between either said linear shape or a linear shape extension line extended along the linear shape and a vehicle width extension line extended along the width of the vehicle.

With the above-described construction, when the vehicle is to be parked at a parking space, it is possible to specify whether the vehicle is approaching a linear shape of a stall delimiting line drawn on the parking space or not. And, if it is specified that the vehicle is indeed approaching such line, the display image can be switched over to the side-view image. Therefore, the driver of the vehicle can readily monitor the vehicle periphery.

With the above-described construction, in accordance with an operation of vehicle for driving it forwardly to be parked at a parking space, the display image can be switched over to the side-view image. Moreover, the side-view image can be displayed also when the vehicle turns to the left. Therefore, it becomes possible to appropriately park the vehicle at a parking space and to prevent accidental getting caught of an object nearby at the time of the left turn.

Further, preferably, said switchover to the side-view image is effected when at the time of forward traveling of the vehicle, a position of intersection formed between either said linear shape or a linear shape extension line extended along the linear shape and a vehicle width extension line extended along the width of the vehicle is within a distance less than a predetermined distance from the vehicle.

With the above-described construction, in case the vehicle driver is driving the vehicle with his/her intension of approaching a stall delimiting line, the display image can be switched over to the side-view image appropriately.

### Brief Description of the Drawings

[Fig. 1] is a block diagram schematically showing a general construction of a periphery monitoring apparatus relating to the present invention,
[Fig. 2] is a view showing imaging devices mounted on the vehicle, imaging areas of these imaging devices and a vehicle width extension line,
[Fig. 3] is a view showing positional relationship between a target feature and a vehicle, the target feature being a white line,
[Fig. 4] is a view showing positional relationship between a target feature and a vehicle, the target feature being a white line,
[Fig. 5] is a table showing an example of display image switching conditions,
[Fig. 6] is a view illustrating an example where the display image on the monitor device has been switched over to an image including a side-view image, and
[Fig. 7] is a flowchart relating to control scheme for the periphery monitoring apparatus.

### Modes of Embodying the Invention

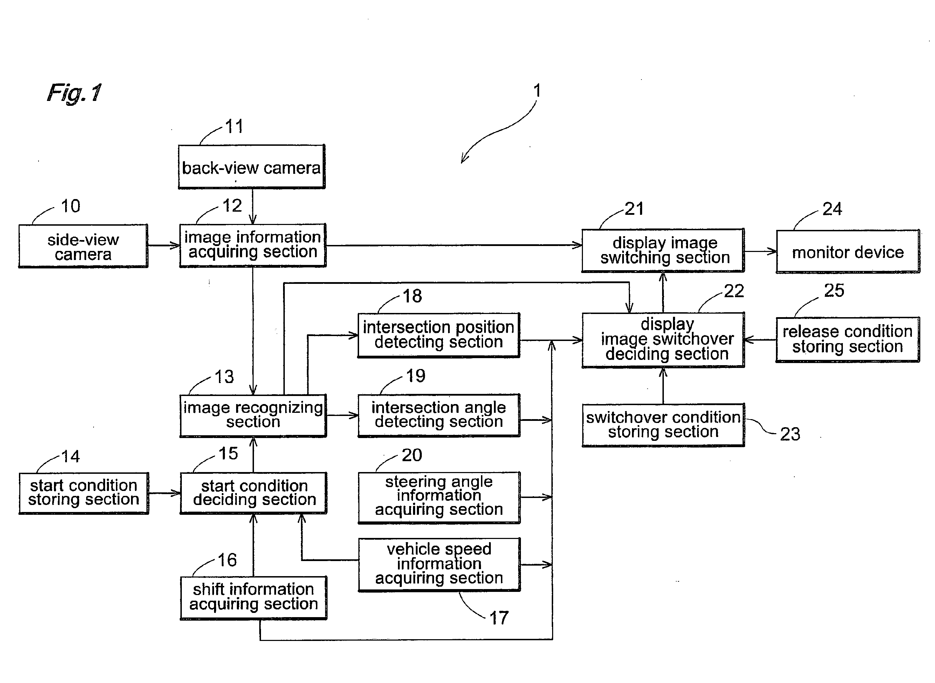

Next, embodiments of the present invention will be described with reference to the accompanying drawings. Fig. 1 is a block diagram schematically showing a general construction of a periphery monitoring apparatus 1 relating to the present invention. This periphery monitoring apparatus 1 includes a monitor device 24 for displaying the periphery of a vehicle 100 and has a function of switching over the display image on the monitor device 24 depending on the condition of the vehicle 100 for enabling appropriate monitoring of the periphery of the vehicle 100.

The periphery monitoring apparatus 1 consists essentially of a side-view camera 10, a back-view camera 11, an image information acquiring section 12, an image recognizing section 13, a start condition storing section 14, a start condition deciding section 15, a shift information acquiring section 16, a vehicle speed information acquiring section 17, an intersection position detecting section 18, an intersection angle detecting section 19, a steering angle information acquiring section 20, a display image switching section 21, a display image switchover deciding section 22, a switchover condition storing section 23, the monitor device 24, and a releasing condition storing section 25. Here, in this periphery monitoring apparatus 1, the above-described functional sections for effecting various processes for monitoring the periphery of the vehicle 100 are comprised of either hardware and/or software, using a CPU as the core component thereof. Next, the constructions of the respective functional sections of this periphery monitoring device 1 will be described.

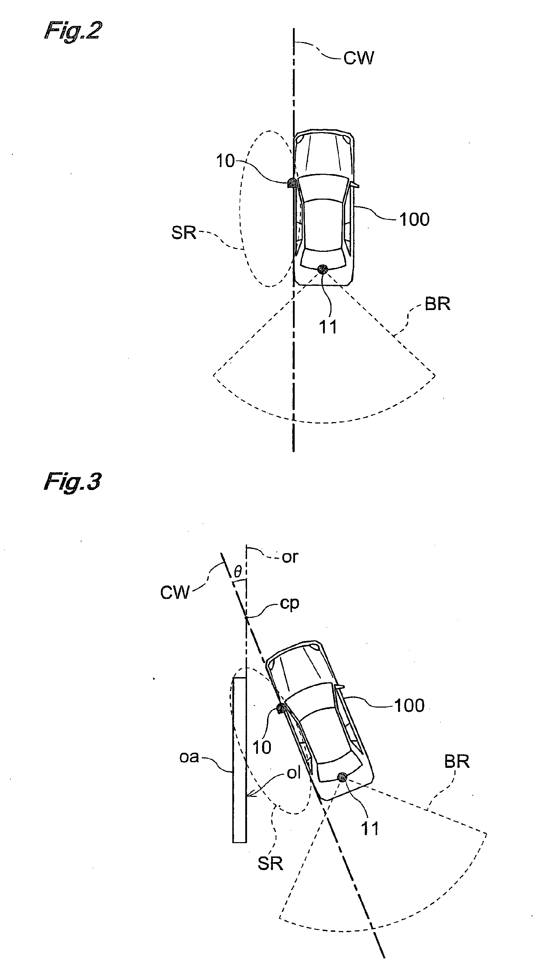

The side-view camera 10 functions as an "imaging device" for imaging or capturing an image of a lateral side of the vehicle 100. In the instant embodiment, the lateral side of the vehicle 100 includes at least the left side of the vehicle 100. To this end, preferably, the side-view camera 10 is disposed at such a position as the camera can capture image of a road surface on the left side of the vehicle 100, or a target feature (oa) (see Figs. 2-4) present on the left side. In the above, the language "road surface" refers to the surface of the road on which the vehicle 100 travels. Also, the target feature (oa) refers to a linear (straight line) shape or feature present on the lateral side of the vehicle 100. One non-limiting example thereof is a road marker (painted marker) painted on the surface of the road. More particularly, this refers to a stall delimiting line for delimiting a traffic lane of the road or a parking space or compartment. Besides such road marker, the target feature (oa) can also be a curbstone disposed beside a road, a side ditch, a plant fence, etc.

Preferably, the side-view camera 10 is mounted within a front fender, or a side face of the front bumper of the vehicle 100 in order to capture the image of the target feature (oa) present on the left side of the vehicle 100. In the following discussion of the instant embodiment, the side-view camera 10 will be explained as being provided within the front fender, as shown in Fig. 2. By disposing the side-view camera 10 at such position as above, it is possible for this camera to capture the image of a left side area SR surrounded by a broken line in Fig. 2.

The back-view camera 11 functions as another imaging device for imaging the rear or back side of the vehicle 100. Preferably, this back-view camera 11 is disposed at such a position as the camera can capture image of a road surface on the back side of the vehicle 100, or a target feature (oa) (see Figs. 2-4) present on the back side. To this end, the back-view camera 11 is disposed preferably in the proximity of the rear view window or rear bumper of the vehicle 100 for instance. In the following discussion of the instant embodiment, the back-view camera 11 will be explained as being provided in the proximity of the rear view window. By disposing the back-view camera 11 at such position as above, it is possible for this camera to capture the image of a back side area BR surrounded by a broken line in Fig. 2.

The image information acquiring section 12 acquires image information obtained by the imaging devices mounted on the vehicle 100. In the instant embodiment, the imaging devices are the side-view camera 10 and the back-view camera 11 as described above. For this reason, the "acquired image information" means images captured by the side-view camera 10 and the back-view camera 11. Therefore, the image information acquiring section 12 obtains the image information of the periphery of the vehicle 100 captured by the side-view camera 10 and the back-view camera 11 mounted on the vehicle 100. The image information acquired by the image information acquiring section 12 is transmitted to the image recognizing section 13 and the display image switching section 21 both of which will be described in details later.

As described above, the principal functions of the side-view camera 10 and the back-view camera 11 reside in capturing the images of the left side view and back side view (these will be generically referred to as the "periphery of the vehicle" hereinafter) of the vehicle 100. In effecting such image capturing of the periphery of the vehicle 100, the images are captured through imaging portions (not shown) having image forming function of the side-view camera 10 and the back-view camera 11. The images captured by these imaging portions are converted into image data or image information by the image information acquiring section 12. More particularly, a photoelectric converter device such as a CCD converts the captured image obtained through the imaging portion into digital data, thus obtaining the image data or information of the captured image. Further, based on this image data, the monitor device 24 can display the captured image. However, in the present invention, as long as there is no need to make any distinction therebetween, the captured image or image data obtained at each step by image-capturing or imaging the periphery of the vehicle 100 will be generically referred to by the language "captured image".

The shift information acquiring section 16 obtains shift information of the vehicle 100. The shift information means information indicative of a current gear stage of a speed changer included in the vehicle 100. The speed changer refers to speed changing controlling means for converting a rotational power transmitted from an engine of the vehicle 100 into a rotational speed or a torque suitable for traveling of the vehicle 100. Some non-limiting examples of such speed changer are a manual transmission (MT) which effects speed change manually and an automatic transmission (AT) which effects speed change automatically. With either type of speed changer, a speed changing control operation is effected in response to an operation of a shift lever by the driver of the vehicle 100. Therefore, with acquisition of information on the current position of the shift lever, the current gear stage can be specified. For this reason, the shift information acquiring section 16 comprises e.g. a position sensor which identifies the current position of the shift lever.

Here, with the periphery monitoring apparatus 1 relating to the present invention, it suffices to be able to specify or identify whether the current gear stage is a forward traveling gear stage for traveling the vehicle 100 forwardly or a reverse traveling gear stage for traveling the vehicle 100 in reverse. Hence, in the following discussion, the shift information will be explained as being indicative of the current gear stage being a forward traveling gear stage or a reverse traveling gear stage. The shift information acquired by the shift information acquiring means is transmitted to the start condition deciding section 15 and the display image switchover deciding section 22.

The vehicle speed information acquiring section 17 acquires vehicle speed information of the vehicle 100. The vehicle speed information refers to information indicative of the speed of the vehicle 100. Therefore, the vehicle speed information acquiring section 17 can acquire the vehicle speed information from a speedometer provided in the vehicle 100 or can calculate the vehicle speed based on angular velocity information indicative of the angular velocity of the drive shaft or the like of the vehicle 100 detected by an unillustrated angular velocity detecting section. The vehicle speed information acquired by the vehicle speed information acquiring section 17 is transmitted to the start condition deciding section 15 and the display image switchover deciding section 22.

The start condition deciding section 15 specifies or identifies a vehicle condition, based on the shift information and the vehicle speed information and decides whether the current vehicle condition satisfies a start condition for causing the image recognizing section 13 to start its image recognition process or not. The shift condition is transmitted from the shift information acquiring section 16 as described above. And, the vehicle speed information is transmitted from the vehicle speed information acquiring section 17. Based on these information, the start condition deciding section 15 specifies the vehicle condition indicative of the current condition of the vehicle 100. The start condition is a requirement condition that causes the image recognizing section 13 to be described later to start its image recognition process. That is, if the current vehicle condition satisfies this start condition, the image recognizing section 13 starts the image recognition process. This start condition is stored in the start condition storing section 14 to be described later. The start condition deciding section 15 refers to the start conditions stored in the start condition storing section 14 and decides whether the current vehicle condition satisfies a start condition stored therein or not. The result of this decision is transmitted to the image recognizing section 13.

The start condition storing section 14 stores the start condition for the image recognizing section 13 to start the image recognition process. This start condition is defined based on the gear stage and the vehicle speed of the vehicle 100. Specifically, the start condition will be defined as a condition of "the speed changer of the vehicle 100 being at a forward traveling gear stage" AND "the vehicle speed being less than 10 km/h", or a condition of "the speed changer of the vehicle 100 being at a reverse traveling gear stage" AND "the vehicle speed being less than 10 km/h", etc. These start conditions can be stored in advance in the start condition storing section 14 or can be set by a user as needed. Further, the start condition can be configured to cause the image recognizing section 13 to start its image recognizing process regardless of the vehicle speed, in case it is decided that the speed changer is at a reverse traveling gear stage.

The image recognizing section 13 recognizes a linear shape present on the lateral side of the vehicle 100 as a target feature (oa) and effects an image recognition process on this target feature (oa) included in the image information. In the instant embodiment, the image recognition process is effected with using the image information obtained by the side-view camera 10. The linear shape refers to a linear (straight line) shape present on the surface of the road on which the vehicle 100 travels. Specifically, it refers to a stall delimiting line painted on the road surface, a curbstone, a side ditch, etc. It is intended to include also a wall of a building, a plant fence, etc. Moreover, it is not limited to a perfect linear line, but includes e.g. a stall delimiting line in the form of dot line, a road cone, etc. The image recognizing section 13 effects the image recognition process on such linear shape as the target feature (oa). In the instant embodiment, the image recognition process is effected with using the image information obtained by the side-view camera 10. Therefore, in the instant embodiment, to the image recognizing section 13, the image information obtained by the side-view camera 10 is transmitted from the image information acquiring section 12.

Further, as described above, the image recognizing section13 effects the image recognition process when the vehicle condition satisfies a start condition stored in the start condition storing section 14. The decision of whether the vehicle condition satisfies a start condition or not is effected by the start condition deciding section15 described above. And, the result of this decision is forwarded to the image recognizing section 13. The image recognizing section 13 starts an image recognition process on the image information transmitted from the image information acquiring section 12 in case this section 13 receives decision result indicating satisfaction of the start condition. Therefore, if no tart condition is satisfied, the image information transmitted from the image information acquiring section 12 will be "erased", without being subjected to any image recognition process.

Alternatively, the image information in the case of the image recognition process being not effected can be stored in an unillustrated image information storing section, rather than being erased. And, this image information stored in the image information storing section can be erased later upon lapse of a preset predetermined period of time or can be eliminated when necessary, depending on the storage capacity of the image information storing section, by the so-called FIFO (first-in-first-out) technique (the process of erasing the image information stored oldest to secure a storable area when the storage capacity has decreased).

The image recognition process effected by the image recognizing section 13 is effected with using a logic suitable to the type of the target feature (oa). Specifically, the image recognizing section 13 first inputs the image information acquired by the image information acquiring section12 and then effects the image recognition process with using a recognition logic suitable to the type of this particular target feature (oa). Incidentally, the recognition logic used for the image recognition process can be stored in an unillustrated recognition logic storing section or can be stored in a storing section comprised of a memory or the like separately incorporated within the image recognizing section 13.

The image recognition process effected by the image recognizing section 13 is effected specifically in a manner described below. In the meantime, in the instant embodiment, there will be described an exemplary case in which a stall delimiting line comprising a white line is set as the target feature (oa). First, for facilitating detection of the white line, there is employed a filter for enhancing the white line. Further, the width of the stall delimiting line for delimiting a parking position in a parking space is regulated by a legal act, ministerial order, etc. Further, the width of the stall delimiting line for delimiting a parking position of a parking space can be set by the intension or desire of the owner of the parking lot. Therefore, the width of the stall delimiting line will differ, depending on the place where the stall delimiting line is provided. For this reason, the filter length will be determined in accordance with the width of the white line of the image included in the captured image captured by the side-view camera 10. With application of this filter, enhancement is effected for a difference in the brightness value between the white line portion and the asphalt portion of the road surface included in the image information, thus facilitating setting of a threshold value for a binarization process. After the binarization process, the process decides presence/absence of a white line, based on the length of the white line and the length of the black line. Advantageously, in making this decision, e.g. decision is made whether the length of white line agrees to the length of black line and it is decided as a white line if these lengths are found in agreement to each other. In this way, the image recognizing section 13 effects image recognition process of the stall delimiting line (white line). Incidentally, this image recognition method is just an example. The image recognition can also be effected with using any other conventional method.

Further, in the above-described image recognition process, decision was made based on agreement or non-agreement between the binarized lengths of white line and black line. In this, the agreement need not necessarily be perfect agreement. Instead, the decision of being a white line or not may be made with e.g. 50% agreement between the white line and the black line. Needless to say, the invention is not limited to 50% agreement, either, but may be agreement of any other ratio. By effecting an image recognition process with setting of such ratio, image recognition process is made possible even for a faded stall delimiting line or the like. The result of the image recognition process effected by the image recognizing section 13 in the manner described above is transmitted to the intersection position detecting section 18, the intersection angle detecting section 19 and the display image switchover deciding section 22.

Based on the image recognition process result by the image recognizing section 13, the intersection position detecting section 18 detects an intersection position (cp) where either a linear shape of the target feature (oa) or a linear shape extension line (or) extended along the linear shape intersects a vehicle width extension line CW extended along the width of the vehicle 100. As described hereinbefore, in the instant embodiment, the target feature (oa) is a white line. Therefore, the linear shape corresponds to a linear portion (ol) of the white line and the intersection position detecting section 18 effects detection of the position of intersection between either the linear portion (ol) of the target feature (oa) or a linear portion extension line (or) extending along the linear portion (ol) and the vehicle width extension line CW extended along the vehicle width of the vehicle 100. Further, the intersection position (cp) is represented as a distance from the vehicle 100, advantageously.

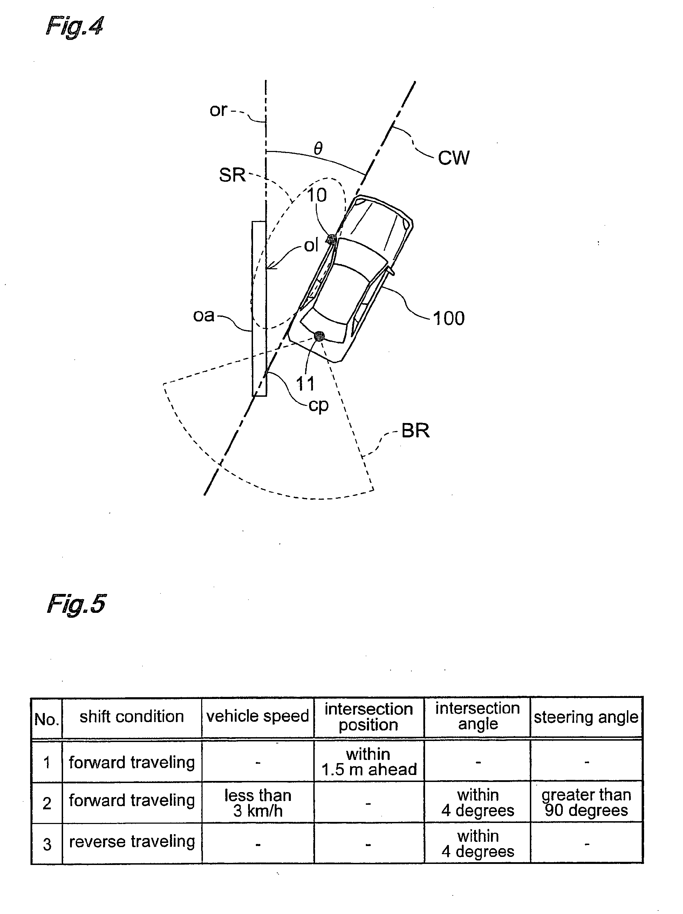

Next, detailed explanation of the above will be given with reference to the accompanying drawings. Fig. 3 and Fig. 4 show the positional relationships between the target feature (oa) and the vehicle 100 in case a white line is set as the target feature (oa). In the case of the situation illustrated in Fig. 3, the vehicle width extension line CW of the vehicle 100 is rotated counter-clockwise relative to the white line. In Fig. 3, the linear shape, that is, the linear portion (ol) corresponds to one of the line of the side near the vehicle 100 representing the longitudinal direction of the white line and the line of the side far from the vehicle100. In the instant embodiment, it represents the line of the side near the vehicle 100. The intersection position detecting section 18 effects detection of position of intersection between either the linear portion (ol) or the linear portion extension line (or) extended along the linear portion (ol). On the other hand, Fig. 4 shows a situation where the vehicle width extension line CW of the vehicle 100 is rotated clockwise relative to the white line. In the case of this situation illustrated in Fig. 4 also, detection is made on the intersection position (cp) where either the linear portion (ol) or the linear portion extension line (or) extended long the linear portion (ol) intersects the vehicle width extension line CW.

Incidentally, in the following discussion, unless indicated explicitly otherwise, regarding the intersection position (cp), if this intersection position (cp) is present at e.g. a position 2 (two) meters forwardly of the vehicle 100, this position will be represented as 2 (two) meters ahead. Whereas, if the intersection position (cp) is located at 2 (two) meters rearwardly of the vehicle 100 as shown in Fig. 4, this position will be represented as 2 (two) meters behind. The intersection position (cp) detected by the intersection position detecting portion 18 will be transmitted as intersection position information to the display image switchover deciding section 22.

The intersection angle detecting portion 19 detects, based on the result of the image recognition process by the image recognizing section 13, an angle of intersection between one of the linear shape and the linear shape extension line (or) extended along the linear shape and the vehicle width extension line CW extended long the vehicle width of the vehicle 100. As described above, in the instant embodiment, the linear shape is the linear portion (ol) of the white line. Therefore, the intersection angle detecting section 19 detects, based on the result of the image recognition process by the image recognizing section 13, the angle of intersection between either the linear portion (ol) of the target feature (oa) or the linear portion extension line (or) extended along the linear line (ol) and the vehicle width extension line CW extended along the vehicle width of the vehicle 100.

Next, more specific explanation will be given with reference to the accompanying drawings. In the case of the situation illustrated in Fig. 3, the intersection angle detecting section 19 detects the intersection angle (θ) of the intersection between the linear portion extension line (or) extended along the linear portion (ol) and the vehicle width extension line CW. On the other hand, in the case of the situation illustrated in Fig. 4, the intersection angle detecting section 19 detects the intersection angle (θ) between the linear portion (ol) and the vehicle width extension line CW.

Incidentally, in the following discussion, unless indicated explicitly otherwise, the explanation on the intersection angle (θ) will be given similarly to the intersection angle θ in the counter-clockwise direction shown in Fig. 3 and to the intersection angle θ in the clockwise direction shown in Fig. 4. That is, if the intersection angle θ between the linear portion (ol) or the linear portion extension line (or) and the vehicle width extension line CW is described as being within 8 (eight) degrees, it is understood that this means both the intersection angle θ relative to the counter-clockwise direction and the intersection angle θ relative to the clockwise direction are within 8 (eight) degrees. The intersection angle θ detected by the intersection angle detecting section 19 is transmitted as intersection angle information to the display image switchover deciding section 22.

The steering angle information acquiring section 20 acquires steering angle information indicative of the steering angle of the steering wheel of the vehicle 100. Here, the language "steering angle" refers to the angle of the steering handle steered by the driver. Therefore, the steering angle information acquiring section 20 can advantageously be comprised of a rotational angle detecting sensor for detecting a rotational angle of the rotational shaft of the steering handle. As is well-known, rotation of a steering wheel is effected as either a clockwise rotation from its neutral position or as a counter-clockwise rotation from the same. In the following discussion of the instant embodiment, a clockwise rotation and a counter-clockwise rotation will be explained equivalently and similarly. That is, if the steering angle is described as being 30 (thirty) degrees or more, this means both the steering angle in the clockwise direction and the steering angle in the counter-clockwise direction being 30 degrees or more. The steering angle information acquired by the steering angle information acquiring means is transmitted to the display image switchover deciding section 22.

The display image switchover deciding section 22 decides whether to switch over the image to be displayed on the monitor device 24 to the side view image relating to the lateral side of the vehicle 100. The side (view) image relating to the lateral side of the vehicle 100, though will be explained in greater details later, is an image including the lateral side of the vehicle 100 and an image based on image information captured by the side-view camera 10. The image based on image information is intended to include both a real image and a virtual image. The language "real image" refers to an image captured by the side-view camera 10. The language "virtual image" refers to an image generated or created with using the image captured by the side-view camera 10, with change of the point of view, such as an upper viewpoint view. Further, in generating a visual image, it is possible to employ not only the image captured by the side-view camera 10, but also an image captured by the back-view camera 11. The display image switchover deciding section 22 effects the above-described decision, based on a predetermined display image switchover condition. In the case of the instant embodiment, the target feature (oa) is a white line. Therefore, approaching of the vehicle 100 to the target feature (oa) means approaching of the vehicle 100 to the white line. Accordingly, the display image switchover deciding section 22 effects the decision whether the vehicle 100 satisfies the display image switchover condition or not, in case this vehicle 100 is approaching the white line.

The decision of whether the vehicle 100 is approaching the white line or not is effected based on the image recognition process result transmitted from the image recognizing section 13. As described above, the image recognizing section 13 starts its image recognition process upon satisfaction of the start condition and transmits the result of this image recognition process to the display image switchover deciding section 22. Therefore, by comparing the result of the currently effected image recognition process and the result of previous image recognition process effected a predetermined time before, it is readily possible to decide whether the vehicle 100 is now approaching the white line or not. When it is decided that the vehicle 100 is approaching the white line, the display image switchover deciding section 22 will then proceed to make a decision whether a preset image switchover condition is being satisfied or not.

The display image switchover condition is a condition which causes the display image switching section 21 to be described later to switch over the display image on the monitor device 24 to a side view image relating to the lateral side of the vehicle 100. This display image switchover condition is stored in advance at the switchover condition storing section 23 to be described later. Further, though will be described in details later, the display image switchover condition is specified or identified by the shift condition of the vehicle 100, the vehicle speed of the vehicle 100, the intersection position (cp) between either the linear portion (ol) of the white line or the linear portion extension line (or) of the same or the vehicle width extension line CW, the intersection angle (θ) between either the linear portion (ol) of the white line or the linear portion extension line (or) of the same or the vehicle width extension line CW, and the steering angle of the steering wheel.

As described above, this shift condition of the vehicle 100 is included in the shift information transmitted from the shift information acquiring section 16. Also, the vehicle speed of the vehicle 100 is included in the vehicle speed information transmitted from the vehicle speed information acquiring section 17. And, the intersection position (cp) between either the linear portion (ol) of the white line or the linear portion extension line (or) of the same or the vehicle width extension line CW is included in the intersection position information transmitted from the intersection position detecting section 18. Further, the intersection angle (θ) between either the linear portion (ol) of the white line or the linear portion extension line (or) of the same or the vehicle width extension line CW is included in the intersection angle information transmitted from the intersection angle information acquiring section 19. And, the steering angle of the steering wheel is included in the steering angle information transmitted from the steering angle information acquiring section 20.

The display image switchover deciding section 22 makes reference to the display image switchover conditions stored in the switchover condition storing section 23 and then, based on the above-described respective kinds of information, decides whether a display image switchover condition is satisfied or not. The result of this decision is transmitted to the display image switching section 21.

The switchover condition storing section 23 stores therein the display image switchover conditions for causing the display image switching section 21 to effect switchover of the display image to be displayed on the monitor device 24. As described hereinbefore, this display image switchover condition is determined, based on the shift condition, the vehicle speed, the intersection position (cp), the intersection angle (θ) and the steering angle of the steering wheel. Specifically, it will be specified, in accordance with intersection angle (θ) of the intersection between either the linear shape or the linear shape extension line (or) extended along the linear shape and the vehicle width extension line CW extended along the vehicle width of the vehicle 100. Further, as the image display switchover condition at the time of forward traveling of the vehicle 100, the condition will be specified in accordance with the speed of the vehicle 100 and the steering angle of the steering wheel. Or, as another display image switchover condition at the time of forward traveling of the vehicle 100, it will be specified in accordance with intersection position (cp) of the intersection between either the linear shape of the linear shape extension line (or) extended along the linear shape and the vehicle width extension line CW extended along the width of the vehicle 100. Some examples of the display image switchover conditions specified as described above are shown in Fig. 5.

For instance, the display image switchover condition denoted with the mark "No. 1" specifies "a shift condition being a forward traveling gear stage" AND specifies also "the intersection position (cp) being within 1.5 meters ahead". Similarly, the display image switchover condition denoted with the mark "No. 2" specifies "a shift condition being a forward traveling gear stage" AND "the vehicle speed being 3 km/h or less" AND specifies also "the intersection angle θ being within 4 degrees" AND "the steering angle being greater than 90 degrees". Further, the display image switchover condition denoted with the mark "No. 3" specifies "a shift condition being a reverse traveling gear stage" AND "the intersection angle θ being within 4 degrees". Such display image switchover conditions may be stored in advance in the switchover condition storing section 23. Or, the display image switchover conditions can be set as needed by a user. And, upon satisfaction of such a condition, the display image switching section 21 effects the switchover to the side-view image.

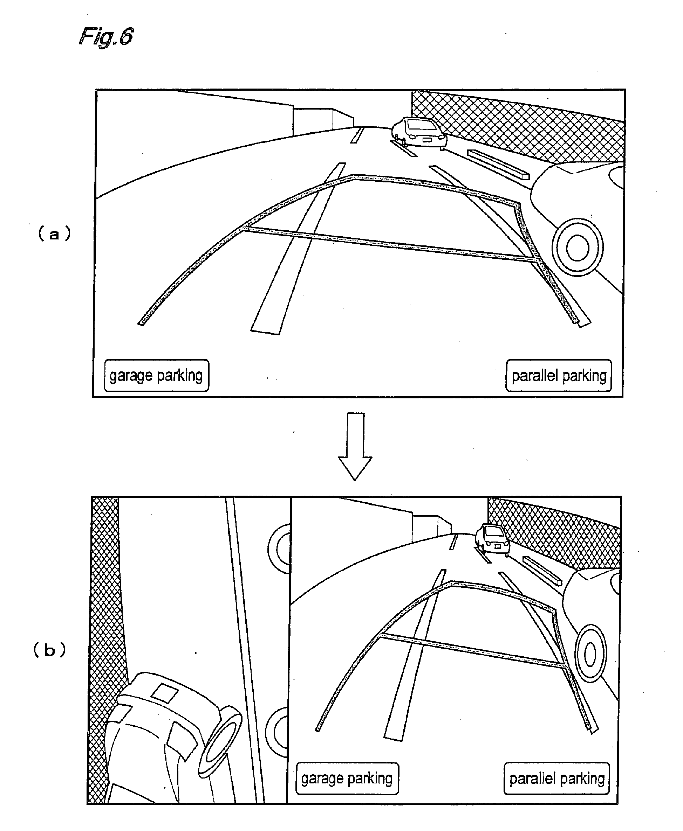

In accordance wit the result of the decision by the display image switchover deciding section 22, the display image switching section 21 switches over the image on the monitor device 24 to the side-view image. To the display image switching section 21, there are transmitted the image information captured by the side-view camera 10 via the image information acquiring section 12 and the image information captured by the back-view camera 11. Further, though not shown, to the display image switching section 21, there are also transmitted image information relating to route guidance by a car navigation system mounted on the vehicle 100 and received image information of a television broadcasting as image information. The display image switching section 21 causes the monitor device 24 to display these kinds of information with switchover therebetween in accordance with the conditions. Further, in case the shift condition is a reverse traveling gear state, there is high possibility of the vehicle 100 being about to travel in reverse. Therefore, the monitor device 24 can be caused to display the captured information captured by the back-view camera 11 as the one shown in Fig. 6 (a).

Upon satisfaction of a display image switchover condition, the display image switching section 21 causes the monitor device 24 to display a side-view image including the lateral side of the vehicle 100. This decision of whether the display image switchover condition is being satisfied or not is effected by the display image switchover deciding section 22. And, the result of this decision is transmitted to the display image switching section 21. In the instant embodiment, the side-view image is an image including the lateral side of the vehicle 100 and is an image based on the information of the image captured by the side-view camera 10. Therefore, upon satisfaction of a display image switchover condition, the display image switching section 21 causes the monitor device 24 to display the image based on the image information captured by the side-view camera 10. Incidentally, this side-view image caused to be displayed by the display image switching section 21 can be displayed on the entire monitoring screen on the monitor device 24 or can be displayed together with the image information originally displayed on the monitor device 24. That is, in case the monitor device 24 was originally displaying captured image information of the rear view of the vehicle 100 such as the one shown in Fig. 6 (a) captured by the back-view camera 11, the side-view image captured by the side-view camera 10 can be displayed as shown in Fig. 6 (b), together with the back-view image information.

Incidentally, unless the display image switching section 21 receives decision result of the display image switchover condition being met, the section 21 will decide that the monitor device 24 is to continue to display the display image which is being displayed already (e.g. image information relating to the route guidance of the car navigation system, the reception image information of the television broadcast, etc.). In these ways, the periphery monitoring apparatus 1 of the present embodiment is capable of appropriately displaying the periphery of the vehicle 100, in accordance with the traveling condition of the vehicle 100.

As described above, the display image switching section 21 causes the monitor device 24 to display the side view image including the lateral side of the vehicle 100 when a display image switchover condition is satisfied. In addition, the display image switching section 21 effects also switchover of releasing the condition of displaying the side view image on the monitor device 24 and causing the device 24 to display other image information (e.g. image information relating to the route guidance of the car navigation system or the reception image information of the television broadcast, etc.). This switchover is effected based on decision of whether the shift condition, the vehicle speed, the intersection position (cp), the intersection angle (θ) and the steering wheel angle satisfy a release condition stored in a release condition storing section 25 or not. This decision is made by the display image switchover deciding section 22 described above.

The release condition storing section 25 stores therein release conditions. This release condition, as described hereinbefore, is determined based on the shift condition, the vehicle speed, the intersection position (cp), the intersection angle (θ) and the steering wheel angle. Specifically, for instance and advantageously, when the condition of "shift condition being a forward traveling gear state" is required as the display image switchover condition, if shift information of occurrence of switchover to a condition of "shift condition being a forward traveling gear stage" is transmitted from the shift information acquiring section 16, the displaying of the side view image can be released.

Alternatively, the displaying of the side view image can be released upon transmission to the vehicle speed information acquiring section 17 of vehicle speed information indicative of "the vehicle speed being higher than 20 km/h". Hence, advantageously, the release conditions for switching the display image from the side view image to other image information will be stored in advance in the release condition storing section 25 and the switchover condition deciding section 22 refers to the release conditions stored in the release condition storing section 25.

In case the display image switchover deciding section 22 has decided that the shift condition, the vehicle speed, the intersection position (cp), the intersection angle (θ) and the steering wheel angle of the vehicle 100 satisfy a release storing condition stored in the release condition storing section 25, the display image switchover deciding section 22 transmits the result of this decision to the display image switching section 21. Then, upon receipt of this decision result, the display image switching section 21 releases the side view image being displayed on the monitor device 24 and causes this monitor device 24 to display only the originally displayed image information. In this way, the display image switching section 21 can switchover the display image on the monitor device 21 from the side view image to other image information.

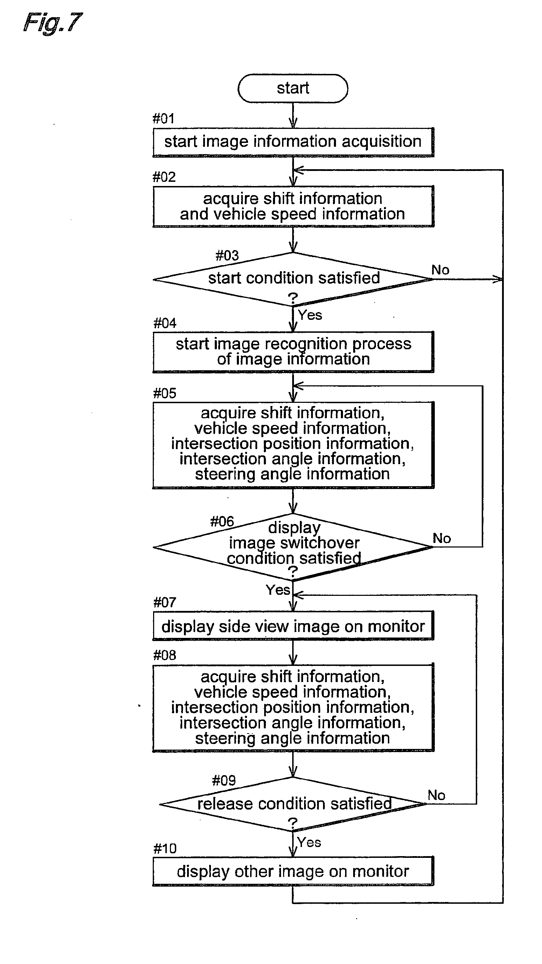

Next, the control operation executed by this periphery monitoring apparatus 1 will be explained with reference to a flowchart. Fig. 7 shows a flowchart relating to the control executed by this periphery monitoring apparatus 1. First, the image information acquiring section 12 starts acquisition of image information (step #01). In the subsequent process, until completion of the process, acquisition of image information will be effected continuously. And, the shift information acquiring section 16 and the vehicle speed information acquiring section 17 respectively acquire shift information and vehicle speed information (step #02). These shift information and vehicle speed information are transmitted to the start condition deciding section 15.

Next, based on the shift information and the vehicle speed information, the start condition deciding section15 effects the decision of whether a start condition is satisfied or not. If no start condition is satisfied (NO at step #03), then, the process returns to step #02 and effects acquisition of shift information and vehicle speed information again (step #02). Incidentally, this start condition is stored at the start condition storing section 14.

At step #03, if it is decided that the shift information and the vehicle speed information satisfy a start condition (YES at step #03), the image recognizing section 13 starts an image recognizing process on the image information transmitted from the image information acquiring section 12 (step #04).

And, the shift information acquiring section 16, the vehicle speed information acquiring section 17, the intersection position detecting section 18, the intersection angle detecting section 19, and the steering angle detecting section 20, respectively acquire shift information, vehicle speed information, intersection position information, intersection angle information and steering angle information (step #05). These shift information, vehicle speed information, intersection position information, intersection angle information and steering angle information are transmitted to the display image switchover deciding section 22.

Next, the display image switchover deciding section 22 effects decision of whether these satisfy a display image switchover condition or not. If no display image switchover condition is met (NO at step #06), the process returns to step #05 and the process continues acquisition of the shift information, vehicle speed information, intersection position information, intersection angle information and steering angle information (step #05). Incidentally, this display image switchover condition is stored at the switchover condition storing section 23.

At step #06, it is decided that the shift information, vehicle speed information, intersection position information, intersection angle information and steering angle information satisfies a display image switchover condition (YES at step #06), then, the display image switching section 21 causes the monitor device 24 to display the side view image including the lateral side of the vehicle 100 (step #07).

And, while this side view image is being displayed on the monitor device 24, the shift information acquiring section 16, the vehicle speed information acquiring section 17, the intersection position information detecting section 18, the intersection angle information detecting section 19, and the steering angle information acquiring section 20 respectively acquire the shift information, vehicle speed information, intersection position information, intersection angle information and steering angle information (step #08).

Next, based on the shift information, vehicle speed information, intersection position information, intersection angle information and steering angle information, the image switchover deciding section 22 effects decision of whether a release condition is being met or not. If no release condition is being met (NO at step #09), the process returns to step #07 and the monitor device 24 is caused to display the side view image in continuation (step #07). Incidentally, this release condition is stored at the release condition storing section 25.

At step #09, if it is decided that the shift information, vehicle speed information, intersection position information, intersection angle information and steering angle information satisfy a release condition (YES at step #09), the display image switching section 21 switches over the display on the monitor device 24 from the side view image including the lateral side of the vehicle 100 to other display image (step #10). Advantageously, this other image is information relating to route guidance of the car navigation system mounted on the vehicle 100 or image information of reception image of television broadcast, etc. And, the process returns to step #02 and continues the processing. In this way, this periphery monitoring apparatus 1 is capable of appropriately displaying the periphery of the vehicle 100 in accordance with the traveling condition of the vehicle 100.

### [Other Embodiments]

In the foregoing embodiment, the side-view image was explained as an image based on information of an image captured by the side-view camera 10. However, the present invention is not limited thereto. For instance, the image recognition process effected by the image recognizing section 13 can be effected with using image information captured by the back-view camera 11 and the side-view image switched over by the display image switching section 21 can be an image based on image information captured by the side-view camera 10. With this arrangement, it becomes possible to effect detection of the intersection position (cp) and the intersection angle (θ), based on the image information captured by the back-view camera 11.

In the foregoing embodiment, the switchover to the side view image was explained as being effected when the intersection position (cp) is within a predetermined distance from the vehicle 100 during forward traveling of the vehicle 100. However, the present invention is not limited thereto. Needless to say, the switchover to the side view image can be effected also when the intersection position (cp) is within a predetermined distance from the vehicle 100 during reverse traveling of the vehicle 100.

In the foregoing embodiment, the side-view image switched over by the display image switching section 21 was explained as information of image captured by the side-view camera 10. However, the present invention is not limited thereto. For instance, the side view image can also be an image captured by the back-view camera 11 and including the lateral side of the vehicle 100. Further, the side view image can be an image information generated based on image information captured by the side-view camera 10 and the back-view camera 11 and including at least the periphery of the vehicle 100.

In the foregoing embodiment, the start conditions stored at the start condition storing section 14, the display image switchover conditions stored at the switchover condition storing section 23 and the release conditions stored at the release condition storing section 25 were explained with citation of some particular numeric values thereof respectively therefor. However, the present invention is not limited thereto. The particular numeric values are only non-limiting examples. It is possible, as a matter of course, to specify the respective conditions with other numeric values, in accordance with the size, the height of the vehicle 100, the user's desire, etc.

In the foregoing embodiment, the display image switching section 21 causes the monitor device 24 to display the side-view image including the lateral side of the vehicle 100, together with image information which was displayed originally on this monitor device 24. However, the present invention is not limited thereto. For instance, the display image switching section 21 can cause the monitor device 24 to display the side-view image including the lateral side of the vehicle 100, in replacement for image information which was displayed originally on this monitor device 24.

### Industrial Applicability

With the present invention, it becomes possible to appropriately display the periphery of the vehicle, in accordance with the traveling condition of the vehicle. Therefore, this invention can be used in the case of effecting a garage parking or a parallel parking or pulling over the vehicle to a side end of a road. The invention can be used also for preventing accidental getting caught of the object at the time of left turn.

## Claims

1. A periphery monitoring apparatus having a monitor device (24) displaying an image of periphery of a vehicle (100), the monitoring apparatus comprising:
an image information acquiring section (12) for acquiring image information captured by an imaging device (10, 11) mounted on the vehicle (100);
a display image switchover deciding section (22) for deciding whether or not a display image to be displayed on the monitor device (24) should be switched over; and
a display image switching section (21) for switching the display image;
an image recognizing section (13) for effecting an image recognition process on a target feature included in said image information, the target feature being a linear shape present on a lateral side of the vehicle (100); wherein
the display image switchover deciding section (22) is adapted for deciding whether or not the display image to be displayed on the monitor device (24) should be switched over to a side-view image relating to the lateral side of the vehicle (100); and **characterized in that**
the display image switching section (21) is adapted for switching said display image to said side-view image, based on result of decision made by said display image switchover deciding section (22), wherein said switchover to the side-view image is effected when the speed of the vehicle (100) at the time of forward traveling is less than a predetermined speed and the steering angle of the steering wheel of the vehicle (100) is greater than a predetermined angle.

2. The periphery monitoring apparatus according to claim 1, wherein said imaging device (10, 11) includes a side-view camera (10) for imaging the lateral side of the vehicle (100) and said image recognition process is effected with using image information captured by said side-view camera (10), and said side-view image is an image based on the image information captured by said side-view camera (10).

3. The periphery monitoring apparatus according to claim 1, wherein said imaging device (10, 11) includes a side-view camera (10) for imaging the lateral side of the vehicle and a back-view camera (11) for imaging a back side of the vehicle (100);
said image recognition process is effected with using image information captured by said back-view camera (11); and
said side-view image is an image based on the image information captured by said side-view camera (10).

4. The periphery monitoring apparatus according to any one of claims 1-3, wherein said switchover to the side-view image is effected when an intersection angle less than a predetermined angle is formed by intersection between either said linear shape or a linear shape extension line extended along the linear shape and a vehicle width extension line extended along the width of the vehicle (100).

5. The periphery monitoring apparatus according to any one of claims 1-3, wherein said switchover to the side-view image is effected when at the time of forward traveling of the vehicle (100), a position of intersection formed between either said linear shape or a linear shape extension line extended along the linear shape and a vehicle width extension line extended along the width of the vehicle (100) is within a distance less than a predetermined distance from the vehicle (100).

## Patentansprüche

1. Peripherieüberwachungsvorrichtung mit einer Monitorvorrichtung (24), die ein Peripheriebild eines Fahrzeugs (100) anzeigt, wobei die Überwachungsvorrichtung enthält:
einen Bildinformationserfassungsabschnitt (12) zum Erfassen von Bildinformation, die durch eine an dem Fahrzeug (100) montierte Bildgebungsvorrichtung (10, 11) aufgenommen ist;
einen Anzeigebildumschaltentscheidungsabschnitt (22) zum Entscheiden, ob ein Anzeigebild, das auf der Monitorvorrichtung (24) anzuzeigen ist, umgeschaltet werden soll;
einen Anzeigebildschaltabschnitt (21) zum Umschalten des Anzeigebilds;
einen Bilderkennungsabschnitt (13) zum Bewirken eines Bilderkennungsprozesses für ein Zielmerkmal, das in der Bildinformation enthalten ist, wobei das Zielmerkmal eine gerade Form ist, die auf einer lateralen Seite des Fahrzeugs (100) vorhanden ist; wobei
der Anzeigebildumschaltentscheidungsabschnitt (22) angepasst ist zum Entscheiden, ob das Anzeigebild, das auf der Monitorvorrichtung (24) anzuzeigen ist, zu einem Seitenansichtsbild umgeschaltet werden soll, das die laterale Seite des Fahrzeugs (100) betrifft; und **gekennzeichnet dadurch, dass**
der Anzeigebildschaltabschnitt (21) angepasst ist zum Umschalten des Anzeigebilds zu dem Seitenansichtsbild basierend auf einem Ergebnis der Entscheidung, die durch den Anzeigebildumschaltentscheidungsabschnitt (22) gefällt worden ist, wobei das Umschalten zu dem Seitenansichtsbild bewirkt wird, wenn die Geschwindigkeit des Fahrzeugs (100) zum Zeitpunkt des Vorwärtsfahrens kleiner ist als eine vorbestimmte Geschwindigkeit, und der Einschlagwinkel des Lenkrads des Fahrzeugs (100) größer ist als ein vorbestimmter Winkel.

2. Peripherieüberwachungsvorrichtung nach Anspruch 1, bei der die Bildgebungsvorrichtung (10,11) eine Seitenansichtskamera (10) enthält zum Abbilden einer lateralen Seite des Fahrzeugs (100), und der Bilderkennungsprozess bewirkt wird unter Verwendung der Bildinformation, die durch die Seitenansichtskamera (100) erfasst wird, und das Seitenansichtsbild ein Bild ist, das auf der Bildinformation basiert, die durch die Seitenansichtskamera (10) erfasst worden ist.

3. Peripherieüberwachungsvorrichtung nach Anspruch 1, bei der die Bildgebungsvorrichtung (100) eine Seitenansichtskamera (10) enthält zum Abbilden der lateralen Seite des Fahrzeugs, und eine Rückansichtskamera (11) zum Abbilden einer Rückseite des Fahrzeugs (100);
der Bilderkennungsprozess bewirkt wird, unter Verwendung der Bildinforation, die von der Rückansichtskamera (11) aufgenommen wird; und
das Seitenansichtsbild ein Bild ist, das auf der Bildinformation basiert, die von der Seitenansichtskamera (10) aufgenommen wird.

4. Peripherieüberwachungsvorrichtung nach einem der Ansprüche 1 bis 3, bei der das Umschalten zu dem Seitenansichtsbild bewirkt wird, wenn ein Kreuzungswinkel, der kleiner als ein vorbestimmter Winkel ist, gebildet wird durch eine Überschneidung zwischen entweder der geraden Form oder einer Erstreckungslinie der geraden Form, die sich entlang der geraden Form erstreckt, und einer Fahrzeugbreitenerstreckungslinie, die sich entlang der Breite des Fahrzeugs (100) erstreckt.

5. Peripherieüberwachungsvorrichtung nach einem der Ansprüche 1 bis 3, bei der das Umschalten zu dem Seitenansichtsbild bewirkt wird, wenn zu dem Zeitpunkt eines Vorwärtsfahrens des Fahrzeugs (100) eine Überschneidungsposition, die gebildet wird zwischen entweder der geraden Form oder der Erstreckungslinie der geraden Form, die sich entlang der geraden Form erstreckt, und eine Fahrzeugbreitenerstreckungslinie, die sich entlang der Breite des Fahrzeugs (100) erstreckt, innerhalb einer Distanz ist, die kleiner als eine vorbestimmte Distanz von dem Fahrzeug (100) ist.

## Revendications

1. Appareil de surveillance périphérique ayant un moniteur (24) affichant une image de la périphérie d'un véhicule (100), l'appareil de surveillance comprenant :
une section (12) d'acquisition d'informations d'image pour acquérir des informations d'image capturées par un dispositif d'imagerie (10, 11) monté sur le véhicule (100) ;
une section (22) décidant du remplacement de l'image d'affichage pour décider si un image d'affichage à afficher sur le moniteur (24) doit être remplacée ou non ; et
une section (21) de remplacement d'image d'affichage pour remplacer l'image d'affichage ;
une section (13) de reconnaissance d'image pour effectuer un processus de reconnaissance d'image sur une caractéristique cible incluse dans lesdites informations d'image, la caractéristique cible étant une forme linéaire présente sur un côté latéral du véhicule (100) ; dans lequel :
la section (22) décidant du remplacement d'image d'affichage est à même de décider si l'image d'affichage à afficher sur le moniteur (24) doit être remplacée par une image en vue latérale se rapportant au côté latéral du véhicule (100) ; et **caractérisé en ce que** :
la section (21) de remplacement de l'image d'affichage est à même de remplacer ladite image d'affichage par ladite image en vue latérale sur la base du résultat de la décision prise par ladite section (22) décidant du remplacement de l'image d'affichage, dans lequel ledit passage à l'image en vue latérale est effectué lorsque la vitesse du véhicule (100) au moment du déplacement en marche avant est inférieure à une vitesse prédéterminée et que l'angle de direction de la roue de direction du véhicule (100) est supérieur à un angle prédéterminé.

2. Appareil de surveillance périphérique selon la revendication 1, dans lequel ledit dispositif d'imagerie (10, 11) comprend une caméra en vue latérale (10) pour imager le côté latéral du véhicule (100) et ledit processus de reconnaissance d'image est effectué en utilisant les informations d'image capturées par ladite caméra en vue latérale (10) et ladite image en vue latérale est une image basée sur les informations d'image capturées par ladite caméra en vue latérale (10).

3. Appareil de surveillance périphérique selon la revendication 1, dans lequel ledit dispositif d'imagerie (10, 11) comprend une caméra en vue latérale (10) pour imager le côté latéral du véhicule et une caméra en vue arrière (11) pour imager un côté arrière du véhicule (100) ;
ledit processus de reconnaissance d'image est effectué en utilisant des informations d'image capturées par ladite caméra en vue latérale (11) ; et
ladite image en vue latérale est une image basée sur les informations d'image capturées par ladite caméra en vue latérale (10).

4. Appareil de surveillance périphérique selon l'une quelconque des revendications 1 à 3, dans lequel ledit passage à l'image en vue latérale est effectué lorsqu'un angle d'intersection inférieur à un angle prédéterminé est formé par intersection entre ladite forme linéaire ou une ligne d'extension de la forme linéaire s'étendant le long de la forme linéaire et une ligne d'extension de la largeur du véhicule le long de la largeur du véhicule (100).

5. Appareil de surveillance périphérique selon l'une quelconque des revendications 1 à 3, dans lequel ledit passage à l'image en vue latérale est effectué lorsque, au moment du déplacement en marche avant du véhicule (100), une position d'intersection entre ladite forme linéaire ou une ligne d'extension de la forme linéaire s'étendant le long de la forme linéaire et une ligne d'extension de la largeur du véhicule le long de la largeur du véhicule (100) se situe à une distance inférieure à une distance prédéterminée du véhicule (100).
